(19) Europäisches Patentamt

European Patent Office

Office européen des brevets

(11) **EP 1 078 959 B1**

(12) **EUROPÄISCHE PATENTSCHRIFT**

(45) Veröffentlichungstag und Bekanntmachung des Hinweises auf die Patenterteilung:
**13.03.2002   Patentblatt 2002/11**

(51) Int Cl.$^7$: **C09C 1/50**, H01M 4/62

(21) Anmeldenummer: **99116930.1**

(22) Anmeldetag: **27.08.1999**

(54) **Furnaceruss, Verfahren zu seiner Herstellung und seine Verwendung**

Furnace black, process for its preparation and its use

Noir de carbone, procédé pour sa préparation et son utilisation

(84) Benannte Vertragsstaaten:
**AT BE CH CY DE DK ES FI FR GB GR IE IT LI LU MC NL PT SE**

(43) Veröffentlichungstag der Anmeldung:
**28.02.2001   Patentblatt 2001/09**

(73) Patentinhaber: **Degussa AG**
**40474 Düsseldorf (DE)**

(72) Erfinder:
• **Albers, Peter, Dr.**
**63454 Hanau (DE)**

• **Auer, Emmanuel, Dr.**
**60528 Frankfurt am Main (DE)**
• **Bergemann, Klaus, Dr.**
**63526 Erlensee (DE)**
• **Starz, Karl-Anton, Dr.**
**63517 Rodenbach (DE)**
• **Volge, Karl, Dr.**
**63755 Alzenau-Michelbach (DE)**
• **Vogler, Conny, Dr.**
**53332 Bornheim-Sechtern (DE)**

(56) Entgegenhaltungen:
**EP-A- 0 754 735          GB-A- 1 347 069**

**Beschreibung**

Die Erfindung betrifft einen Furnaceruß, ein Verfahren zu seiner Herstellung sowie seine Verwendung.

In einem Furnaceruß-Reaktor kann durch Pyrolyse von Kohlenwasserstoffen Furnaceruße hergestellt werden, wie aus Ullmanns Encyklopädie der technischen Chemie, Band 14, Seite 637-640 (1977) bekannt ist. In dem Furnaceruß-Reaktor wird durch Verbrennung eines Brenngases oder eines flüssigen Brennstoffes mit Luft eine Zone mit hoher Energiedichte erzeugt und darin der Rußrohstoff eingedüst. Bei Temperaturen zwischen 1200°C-1900°C wird der Rußrohstoff pyrolisiert. Die Rußstruktur läßt sich durch die Anwesenheit von Alkali- oder Erdalkaliionen bei der Rußbildung beeinflussen, deshalb werden häufig derartige Additive als wäßrige Lösungen dem Rußrohstoff zugesetzt. Die Reaktion wird durch Eindüsen von Wasser abgebrochen (Quenchen) und der Ruß mit Abscheidern beziehungsweise Filtern vom Abgas getrennt. Der so erhaltene Ruß wird auf Grund seiner geringen Schüttdichte noch granuliert. Dies kann in einer Perlmaschine unter Zusatz von Wasser, dem geringe Mengen eines Perlhilfsmittels zugemischt werden können, erfolgen.

Bei gleichzeitiger Verwendung von Rußöl und gasförmigen Kohlenwasserstoffen, wie zum Beispiel Methan, als Rußrohstoff, können die gasförmigen Kohlenwasserstoffe getrennt vom Rußöl über einen eigenen Satz von Gaslanzen in den Strom des heißen Abgases injiziert werden.

Wird das Rußöl auf zwei verschiedene Injektionsstellen, die längs der Reaktorachse gegeneinander versetzt sind, aufgeteilt, so ist an der ersten stromaufwärts liegenden Stelle die in dem Brennkammer-Abgas noch enthaltene Restsauerstoffmenge relativ zum eingesprühten Rußöl im Überschuß vorhanden. Die Rußbildung findet also an dieser Stelle bei höherer Temperatur statt als im Vergleich zu nachfolgenden Rußinjektionsstellen, das heißt an der ersten Injektionsstelle bilden sich stets feinteiligere Ruße mit höherer spezifischer Oberfläche als an einer nachfolgenden Injektionsstelle. Jede weitere Injektion von Rußölen führt zu weiteren Temperaturabsenkungen und zu Rußen mit größeren Primärteilchen. Solcher Art hergestellte Ruße weisen also eine Verbreiterung der Aggregatgrößen-Verteilungskurve auf und zeigen nach Einarbeitung in Gummi ein anderes Verhalten als Ruße mit einem sehr engen monomodalen Aggregatgrößenspektrum. Die breitere Aggregatgrößen-Verteilungskurve führt zu einem geringeren Verlustfaktor der Gummimischung, das heißt zu einer geringeren Hysterese, weshalb man auch von low hysteresis Rußen spricht. Ruße dieser Art, beziehungsweise Verfahren zu ihrer Herstellung, werden in den Patenten EP 0 315 442 und EP 0 519 988 beschrieben.

Aus der DE 19521565 sind Furnaceruße mit CTAB-Werten zwischen 80 und 180 $m^2/g$ und 24M4-DBP Absorption zwischen 80 und 140 ml/100g bekannt, für die bei Einarbeitung in eine SSBR/BR-Gummimischung ein $\tan\delta_0/\tan\delta_{60}$-Verhältnis von

$$\tan\delta_0/\tan\delta_{60} > 2{,}76 - 6{,}7 \times 10^{-3} \times CTAB$$

und der $\tan\delta_{60}$-Wert stets niedriger ist als der Wert für ASTM-Ruße mit gleicher CTAB-Oberfläche und 24M4-DBP Absorption, gilt. Bei diesem Verfahren wird der Brennstoff, zur Bildung von Keimen, mit einer rußenden Flamme verbrannt.

Aufgabe der vorliegenden Erfindung ist es, einen Ruß herzustellen, der eine höhere Aktivität in der Anwendung als Trägermaterial für Elektrokatalysatoren in Brennstoffzellen besitzt.

Gegenstand der Erfindung ist ein Furnaceruß, dadurch gekennzeichnet, daß er einen H-Gehalt von größer 4000 ppm, bestimmt durch CHN-Analytik, und einen Peakintegralverhältnis, bestimmt durch inelastische Neutronenstreuung (INS), von nicht-konjugierten H-Atomen (1250-2000 $cm^{-1}$) zu aromatischen und graphitischen H-Atomen (1000-1250 $cm^{-1}$ und 750-1000 $cm^{-1}$) von kleiner 1,22 besitzt.

Der H-Gehalt kann größer 4200 ppm, vorzugsweise größer 4400 ppm, sein. Das Peakintegralverhältnis von nicht-konjugierten H-Atomen (1250-2000 $cm^{-1}$) zu aromatischen und graphitischen H-Atomen (1000-1250 $cm^{-1}$ und 750-1000 $cm^{-1}$) kann kleiner 1,20 sein.

Die CTAB-Oberfläche kann von 20 bis 200 $m^2/g$, vorzugsweise von 20 bis 70 $m^2/g$, betragen. Die DBP-Zahl kann von 40 bis 160 ml/100g, vorzugsweise 100 bis 140 ml/100g, betragen.

Der sehr hohe Wasserstoffgehalt ist ein Hinweis auf ein starke Störung des Kohlenstoffgitters durch erhöhte Zahl an Kristallitkanten.

Ein weiterer Gegenstand der Erfindung ist ein Verfahren zur Herstellung des erfindungsgemäßen Furnacerußes in einem Rußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, welches dadurch gekennzeichnet ist, daß ein flüssiger und gasförmiger Rußrohstoff an derselben Stelle eingedüst werden.

Der flüssige Rußrohstoff kann durch Druck, Dampf, Preßluft oder den gasförmigen Rußrohstoff zerstäubt werden.

Flüssige Kohlenwasserstoffe verbrennen langsamer als gasförmige, da sie zuerst in die Gasform überführt, das heißt verdampft werden müssen. Hierdurch befinden sich im Ruß Anteile, die aus dem Gas gebildet werden und solche die aus der Flüssigkeit gebildet werden.

Als Meßzahl zur Kennzeichnung des Luftüberschusses wird häufig der sogenannte K-Faktor verwendet. Es handelt sich bei dem K-Faktor um das Verhältnis der für eine stöchiometriche Verbrennung des Brennstoffes benötigten Luftmenge zu der tatsächlich der Verbrennung zugeführten Luftmenge. Ein K-Faktor von 1 bedeutet also eine stöchiometrische Verbrennung. Bei Luftüberschuß ist der K-Faktor kleiner 1. Dabei können wie bei bekannten Rußen K-Faktoren zwischen 0,3 und 0,9 angewendet werden. Bevorzugt wird mit K-Faktoren zwischen 0,6 und 0,7 gearbeitet.

Als flüssiger Rußrohstoff können flüssige aliphatische oder aromatische, gesättigte oder ungesättigte Kohlenwasserstoffe oder Mischungen hiervon, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, eingesetzt werden.

Als gasförmiger Rußrohstoff können gasförmige aliphatische, gesättigte oder ungesättigte Kohlenwasserstoffe, Mischungen hiervon oder Erdgas eingesetzt werden.

Das beschriebene Verfahren ist nicht auf eine bestimmte Reaktorgeometrie beschränkt. Es kann vielmehr auf verschiedene Reaktortypen und Reaktorgrößen angepaßt werden.

Als Rußrohstoff-Zerstäuber können sowohl reine Druckzerstäuber (Einstoffzerstäuber) als auch Zweistoffzerstäuber mit innerer oder äußerer Mischung eingesetzt werden, wobei als Zerstäubungsmedium der gasförmige Rußrohstoff verwendet werden kann. Die vorstehend beschriebene Kombination eines flüssigen mit einem gasförmigen Rußrohstoff kann also zum Beispiel durch Verwendung des gasförmigen Rußrohstoffs als Zerstäubungsmedium für den flüssigen Rußrohstoff realisiert werden.

Bevorzugt können zur Zerstäubung von flüssigem Rußrohstoff Zweistoffzerstäuber eingesetzt. Während bei Einstoffzerstäubern eine Änderung des Durchsatzes auch zu einer Änderung der Tröpfchengröße führen kann, kann die Tröpfchengröße bei Zweistoffzerstäubern weitgehend unabhängig vom Durchsatz beeinflußt werden.

Mit dem erfindungsgemäßen Verfahren kann die gesamte Palette der industriellen Furnaceruße hergestellt werden. Dem Fachmann sind die hierfür notwendigen Maßnahmen wie zum Beispiel die Einstellung der Verweilzeit in der Reaktionszone und die Zugabe von Additiven zur Beeinflussung der Rußstruktur bekannt.

## Beispiele

In den folgenden Beispielen und Vergleichsbeispielen werden erfindungsgemäße Furnaceruße hergestellt und ihre Verwendung als Trägermaterial für Elektrokatalysatoren beschrieben. Dabei werden die elektrochemischen Leistungsdaten in einer Brennstoffzelle als Kriterium für die Beurteilung der Furnaceruße verwendet.

### Herstellung des Rußes B1:

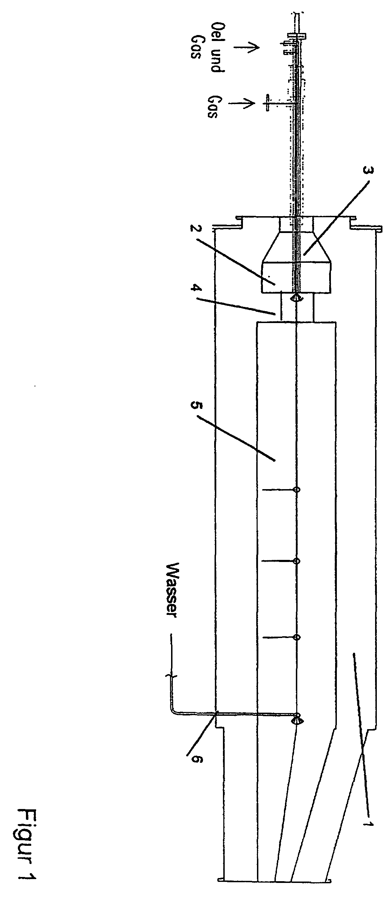

Es wird ein erfindungsgemäßer Ruß in dem in Figur 1 dargestellten Rußreaktor 1 hergestellt. Dieser Rußreaktor 1 besitzt eine Brennkammer 2. Das Öl und Gas wird über die axiale Lanze 3 in die Brennkammer eingeführt. Die Lanze kann zur Optimierung der Rußbildung in axialer Richtung verschoben werden.

Die Brennkammer läuft auf die Engstelle 4 zu. Nach Durchqueren der Engstelle expandiert das Reaktionsgasgemisch in die Reaktionskammer 5.

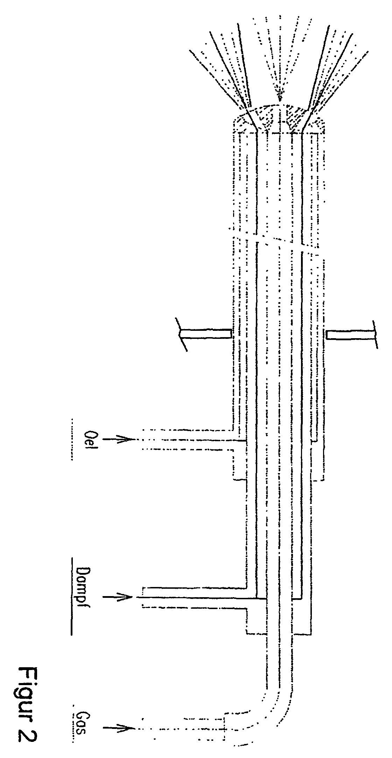

Die Lanze weist an ihrem Kopf geeignete Sprühdüsen auf (Figur 2).

Die für das erfindungsgemäße Verfahren wichtige Verbrennungszone, Reaktionszone und Abbruchzone können nicht scharf voneinander getrennt werden. Ihre axiale Ausdehnung hängt von der jeweiligen Positionierung der Lanzen und der Quenchwasser-Lanze 6 ab.

Die Abmessungen des verwendeten Reaktors sind der folgenden Aufstellung zu entnehmen:

| | |
|---|---|
| Größter Durchmesser der Brennkammer: | 696 mm |
| Länge der Brennkammer bis Engstelle: | 630 mm |
| Durchmesser der Engstelle: | 140 mm |
| Länge der Engstelle: | 230 mm |
| Durchmesser der Reaktionskammer: | 802 mm |
| Position der Öllanzen [1] | + 160 mm |

[1] gemessen vom Nullpunkt (Beginn Engstelle)

(fortgesetzt)

| Position der Quenchwasserlanzen [1) | 2060 mm |
|---|---|

[1) gemessen vom Nullpunkt (Beginn Engstelle)

Die Reaktorparameter für die Herstellung des erfindungsgemäßen Rußes sind in der folgenden Tabelle aufgeführt.

| Reaktorparameter Parameter | Ruß | |
|---|---|---|
| | Einheit | B1 |
| Verbrennungsluft | $Nm^3/h$ | 1500 |
| Temperatur der Verbrennungsluft | °C | 550 |
| Z Erdgas | $Nm^3/h$ | 156 |
| $\Sigma$-Faktor (gesamt) | | 0,70 |
| Rußöl, axial | kg/h | 670 |
| Rußöl-Stellung | mm | +16 |
| Zerstäuberdampf | kg/h | 100 |
| Additiv ($K_2CO_3$-Lösung) | l/h x g/l | 5,0 x 3,0 |
| Additiv Position | | axial |
| Reaktorausgang | °C | 749 |
| Quenchposition | mm | 9/8810 |

**Charakterisierung des Rußes B1:**

Die Wasserstoffgehalte der Ruße wird durch CHN-Elementanalytik (LECO RH-404-Analysator mit Wärmeleitfähigkeitsdetektor) bestimmt. Die Methode der inelastischen Neutronenstreuung (INS) ist in der Literatur beschrieben (P. Albers, G. Prescher, K. Seibold, D. K. Ross and F. Fillaux, *Inelastic Neutron Scattering Study Of Proton Dynamics In Carbon Blacks,* Carbon 34 (1996) 903 und P. Albers, K. Seibold, G. Prescher, B. Freund, S. F. Parker, J. Tomkinson, D. K. Ross, F. Fillaux, *Neutron Spectroscopic Investigations On Different Grades Of Modified Furnace Blacks And Gas Blacks,* Carbon 37 (1999) 437).

Die Methode INS (beziehungsweise IINS - Inelastische, inkohärente Neutronenstreuung) bietet einige recht einmalige Vorteile für die noch intensivere Charakterisierung von Rußen und Aktivkohlen.

Ergänzend zur bewährten elementaranalytischen Quantifizierung des H-Gehaltes, erlaubt es die INS-Methode den zum Teil recht geringen Wasserstoffanteil in graphitisierten Rußen (ca. 100-250 ppm), Rußen (ca. 2000-4000 ppm in Furnacerußen) und in Aktivkohlen (ca. 5000-12000 ppm in typischen Katalysatorträgern) detaillierter hinsichtlich seiner Bindungszustände aufzuschlüsseln.

In der folgenden Tabelle sind die mittels CHN-Analytik (LECO RH-404-Analysator mit Wärmeleitfähigkeitsdetektor) bestimmten Werte des Gesamtwasserstoffgehaltes der Ruße aufgeführt. Zudem sind die Spektrenintegrale angegeben, die folgendermaßen bestimmt werden: Integration der Bereiche eines INS-Spektrums von 750-1000 $cm^{-1}$ (A), 1000-1250 $cm^{-1}$ (B) und 1250-2000 $cm^{-1}$ (C). Die aromatischen und graphitischen H-Atome werden durch die Summe aus dem Peakintegral A und B gebildet.

Die Ruße werden ohne weitere Vorbehandlung in speziell entwickelte Al-Küvetten (Al der Reinheit 99,5%, Küvetten-Wandstärke 0,35 mm, Küvetten-Durchmesser 2,5 cm) gefüllt. Diese werden hermetisch verschlossen (Flanschdichtung aus Kalrez O-Ring).

| Ruß | H-Gehalt [ppm] durch CHN-Element-analytik | Peakintegral durch INS-Messungen | | | Verhältnis C/(A+B) |
|---|---|---|---|---|---|
| | | A | B | C | |
| | | 750-1000cm$^{-1}$ out of plane C-H-Deformationsschwingung | 1000-1250cm$^{-1}$ in plane C-H-Deformationsschwingung | 1250-2000cm$^{-1}$ C-H-Deformationsschwingung nicht konjugierter Bestandteile | nichtkonjugierte H-Atome zu aromatischen und graphitischen H-Atomen |
| B1 | $4580 \pm 300$ | $107 \pm 1$ | $99 \pm 1$ | $241 \pm 3$ | 1,17 |
| N 234 | 3853 | $23,2 \pm 1$ | $21,4 \pm 1$ | $55 \pm 3$ | 1,23 |
| EB 111 DE 19521565 | 4189 | $27,4 \pm 1$ | $26,1 \pm 1$ | $68 \pm 3$ | 1,27 |
| Vulcan XC-72 Furnaceruß | $2030 \pm 200$ | $69 \pm 1$ | $63 \pm 1$ | $176 \pm 3$ | 1,33 |

B1 zeigt somit relativ zu den anderen Rußen quantitativ mehr Wasserstoff, jedoch ist sein Verhältnis von $sp^3$/$sp^2$-H erniedrigt, das heißt der Mehranteil an Wasserstoff ist insbesondere aromatisch/graphitisch gebunden. Es handelt sich um C-H-Protonen an mit Wasserstoff abgesättigten Abbruchkanten und Fehlstellen und damit um ein im Mittel stärker gestörte Oberfläche. Trotzdem weist der Ruß B1 absolut betrachtet gleichzeitig auch den höchsten Anteil gestörter, nicht-konjugierter Bestandteile auf, ohne daß hingegen - relativ betrachtet - sein $sp^3$/$sp^2$-Charakter drastisch in Richtung $sp^3$ verändert wäre.

Das Oberflächenverhältnis der spezifischen Oberflächen BET-Adsorption durch CTAB (Cetylammoniumbromid) Adsorption wird gemäß der Norm DIN 66 132 bestimmt.

| Ruß | CTAB-Oberfläche [$m^2$/g] | BET-Oberfläche [$m^2$/g] | BET:CTAB-Oberflächen-verhältnis |
|---|---|---|---|
| B1 | 30 | 30 | 1 |

**Beispiel 1**

20,1 g Ruß B1 (Feuchte 0,5 Gew.-%) werden in 2000 ml voll entsalztem Wasser suspendiert. Nach Erhitzen auf 90 °C und Einstellen des pH-Wertes auf 9 mit Natriumhydrogencarbonat werden 5 g Platin in Form von Hexachloroplatin(IV)säure-Lösung (25 Gew.-% Pt) hinzugefügt, die Suspension erneut auf pH 9 eingestellt, mit 6,8 ml Formaldehydlösung (37 Gew.-%) reduziert, nach Filtration mit 2000 ml voll entsalztem Wasser gewaschen und bei 80 °C in Vakuum 16 h getrocknet. Der so erhaltene Elektrokatalysator weist einen Platingehalt von 20 Gew.-% auf.

**Vergleichsbeispiel 1**

In Analogie zu Beispiel 1 werden 20,0 g Vulcan XC-72 R (bezogen auf Trockengewicht) der Firma Cabot in 2000 ml voll entsalztem Wasser suspendiert. Die Herstellung des Elektrokatalysators erfolgt in derselben Weise, wie in Beispiel 1 beschrieben. Man erhält nach Trocknung im Vakuum einen Elektrokatalysator, der einen Platin-Gehalt von 20 Gew.-% aufweist.

**Beispiel 2**

Zu einer Suspension von 80,4 g Ruß B1 (Feuchte 0,5 Gew.-%) in 2000 ml vollentsalztem Wasser gibt man unter Rühren bei Raumtemperatur eine Lösung von 52,7 g Hexachloroplatin (IV) säure (25 Gew.-% Pt) und 48,4 g Ruthenium (III) chloridlösung (14 Gew.-% Ru) in 200 ml deionisiertem Wasser. Man erwärmt auf 80 °C und stellt mit Natronlauge einen pH-Wert von 8,5 ein. Nach Zugabe von 27,2 ml einer Formaldehydlösung (37 Gew.-%) wird abfiltriert, mit 2000 ml voll entsalztem Wasser nachgewaschen und der feuchte Filterkuchen bei 80 °C im Vakuumtrockenschrank getrocknet. Man erhält einen Elektrokatalysator, der 13,2 Gew.-% Platin und 6,8 Gew.-% Ruthenium enthält.

**Vergleichsbeispiel 2**

In Analogie zu Beispiel 2 wird unter Verwendung von 81,1 g Vulcan XC-72 R (Feuchte 1,39 Gew.-% als Katalysatorträger ein Platin-Ruthenium-Katalysator erhalten, der 13,2 Gew.-% Pt und 6,8 Gew.-% Ru enthält.

Die Synthese von Vergleichsbeispiel 2 ist in DE 197 21 437 unter Beispiel 1 beschrieben.

Die Elektrokatalysatoren werden für die elektrochemische Charakterisierung zu einer Membran-Elektroden-Einheit (MEA = membrane electrode assembly) verarbeitet. Der erfindungsgemäße Elektrokatalysator gemäß Beispiel 1 sowie der Elektrokatalysator gemäß Vergleichsbeispiel 1 werden als Kathodenkatalysatoren in Wasserstoff / Luft und Wasserstoff /-Sauerstoffbetrieb charakterisiert. Der erfindungsgemäße Elektrokatalysator gemäß Beispiel 2 sowie der Elektrokatalysator gemäß Vergleichsbeispiel 2 werden als CO-tolerante Anodenkatalysatoren im Reformat / Sauerstoffbetrieb getestet.

Die Kathoden- und Anoden-Katalysatoren werden gemäß Beispiel 1 der in US 5 861 222 beschriebenen Verfahrens auf eine ionenleitfähige Membran (Nafion 115) aufgebracht. Die so beschichtete Membran wird zwischen zwei leitfähig hydrophobierte Kohlepapiere (Firma TORAY, TGC 90) gelegt. Die Belegung der Kathoden- und Anodenseite beträgt jeweils 0,25 mg Platin/$cm^2$. Die so erhaltene Membran-Elektroden-Einheit (MEA) wird in einer PEM-Einzelzelle (Druckloser Betrieb, Temperatur 80°C) vermessen, wobei eine Stromdichte von 0,4 A/$cm^2$ eingestellt wird.

Zur elektrochemischen Testung der Kathoden-Katalysatoren werden beide Seiten der Membran mit einer Paste eines unter Beispiel 1 beziehungsweise Vergleichsbeispiel 1 beschriebenen Platinkatalysators beschichtet.

Als Brenngas auf der Kathode wird Sauerstoff beziehungsweise Luft, auf der Anode Wasserstoff verwendet.

| Katalysator | Zell-Leistung bei 400 mA/cm$^2$ [mV] | | Zell-Leistung bei 500 mA/cm$^2$ [mV] | |
|---|---|---|---|---|
| | O$_2$ | Luft | O$_2$ | Luft |
| Beispiel 1 | 687 | 606 | 649 | 545 |
| Vergleichsbeispiel 1 | 630 | 518 | 576 | 429 |

Die Herstellung einer Membran-Elektrodeneinheit zur Testung des Anoden-Katalysators erfolgt in völliger Analogie zu dem für die Kathoden-Katalysatoren beschriebenen Verfahren gemäß US 5 861 222.

Dabei wird als Anoden-Katalysator ein nach Beispiel 2 beziehungsweise Vergleichsbeispiel 2 hergestellter geträgerter Pt-Ru-Katalysator verwendet. Auf der Kathodenseite wird in beiden Membran-Elektrodeneinheiten ein nach Vergleichsbeispiel 1 hergestellter Platinkatalysator verwendet.

Die Messung erfolgt in einer PEM-Einzelzelle (Druckbetrieb, bei 3 bar Temperatur 75°C), wobei eine Stromdichte von 0,5 A/cm$^2$ eingestellt wird.

Die Zellspannung U im Wasserstoff/Sauerstoff-Betrieb (ohne Zudosierung von Reformat und/oder CO auf der Anodenseite) gilt als Maß für die Katalysatoraktivität.

Der Spannungsabfall ΔU, der nach der Zudosierung von 100 ppm CO zum Brenngas auftritt, wird als Maß für die CO-Toleranz des Katalysators herangezogen.

Folgende Brenngaszusammensetzung im Reformat / CO-Betrieb wird verwendet: 58 Vol.-% H$_2$; 15 Vol.-% N$_2$, 24 Vol.-% CO$_2$, 3 Vol.-% Luft ("Airbleed").

| Katalysator | H$_2$/O$_2$-Betrieb: Zell-Leistung bei 500 mA/cm$^2$ [mV] | Reformat/O$_2$- Betrieb: Zell- Leistung bei 500 mA/cm$^2$ [mV] | ΔU CO-induzierter Spannungs- abfall [mV] |
|---|---|---|---|
| Beispiel 2 | 715 | 661 | - 54 |
| Vergleichsbeispiel 2 | 686 | 620 | - 66 |

Die Zell-Leistung ist für die Beispiele 1 und 2 deutlich erhöht gegenüber den jeweiligen Vergleichsbeispielen.

**Patentansprüche**

1. Furnaceruß,
   **dadurch gekennzeichnet,**
   **daß** er einen H-Gehalt von größer 4000 ppm, bestimmt durch CHN-Analytik, und ein Peakintegralverhältnis, bestimmt durch inelastische Neutronenstreuung (INS), von nicht-konjugierten H-Atomen (1250-2000 cm$^{-1}$) zu aromatischen und graphitischen H-Atomen (1000-1250 cm$^{-1}$ und 750-1000 cm$^{-1}$) kleiner 1,22 besitzt.

2. Verfahren zur Herstellung von Furnaceruß nach Anspruch 1 in einem Rußreaktor, welcher längs der Reaktorachse eine Verbrennungszone, eine Reaktionszone und eine Abbruchzone enthält, durch Erzeugen eines Stromes heißen Abgases in der Verbrennungszone durch vollständiges Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser,
   **dadurch gekennzeichnet,**
   **daß** ein flüssiger und gasförmiger Rußrohstoff an derselben Stelle eingedüst werden.

3. Verwendung des Furnaceruß nach Anspruch 1 für die Herstellung von Elektrokatalysatoren.

**Claims**

1. Furnace carbon black,
   **characterised in that**
   it has an H content of greater than 4000 ppm, determined by CHN analysis, and a peak integral ratio, determined by inelastic neutron scattering (INS), of non-conjugated H atoms (1250-2000 cm$^{-1}$) to aromatic and graphitic H atoms (1000-1250 cm$^{-1}$ and 750-1000 cm$^{-1}$) of less than 1.22.

2. Process for the production of furnace carbon black according to claim 1 in a carbon black reactor which contains, along the axis of the reactor, a combustion zone, a reaction zone and a termination zone, by producing a stream of hot waste gas in the combustion zone by completely burning a fuel in an oxygen-containing gas and passing the waste gas from the combustion zone through the reaction zone into the termination zone, mixing a carbon black raw material into the hot waste gas in the reaction zone and stopping carbon black formation in the termination zone by spraying in water,
**characterised in that**
a liquid carbon black raw material and a gaseous carbon black raw material are injected at the same point.

3. Use of the furnace carbon black according to claim 1 in the preparation of electrocatalysts.

**Revendications**

1. Noir de fourneau,
**caractérisé en ce qu'**
il possède une teneur en hydrogène supérieure à 4000 ppm, déterminée par analyse CHN, et un rapport d'intégrale de pic, déterminé par dispersion neutronique inélastique (INS), des atomes d'hydrogène non conjugués (1250-2000 cm$^{-1}$) aux atomes d'hydrogène aromatiques et graphitiques (1000-1250 cm$^{-1}$ et 750-1000 cm$^{-1}$) inférieur à 1,22.

2. Procédé de préparation de noir de fourneau selon la revendication 1 dans un réacteur à noir de fumée, qui contient le long de l'axe du réacteur, une zone de combustion, une zone de réaction et une zone de rupture, par production d'un courant de gaz usé chaud dans la zone de combustion, par combustion complète d'un combustible dans un gaz contenant de l'oxygène et conduction du gaz usé depuis la zone de combustion à travers la zone de réaction dans la zone de rupture, mélange d'une matière première de noir de fumée dans le gaz usé chaud dans la zone de réaction et arrêt de la formation de noir de fumée dans la zone de rupture par injection d'eau,
**caractérisé en ce qu'**
on injecte au même endroit une matière première de noir de fumée liquide et une matière première de noir de fumée gazeuse.

3. Utilisation du noir de fourneau selon la revendication 1 pour la production d'électrocatalyseurs.

Figur 1

9

Figur 2

Oel

Dampf

Gas